**Europäisches Patentamt**

(19) **European Patent Office**

**Office européen des brevets**

(11) Veröffentlichungsnummer: **0 033 005**
**B1**

(12) EUROPÄISCHE PATENTSCHRIFT

(45) Veröffentlichungstag der Patentschrift:
30.05.84

(51) Int. Cl.³: **G 01 K 7/02**

(21) Anmeldenummer: **80108003.7**

(22) Anmeldetag: **18.12.80**

(54) **Verbrauchbarer Messkopf für Tauchthermoelemente.**

(30) Priorität: **04.01.80 DE 3000174**

(43) Veröffentlichungstag der Anmeldung:
**05.08.81 Patentblatt 81/31**

(45) Bekanntmachung des Hinweises auf die Patenterteilung:
**30.05.84 Patentblatt 84/22**

(84) Benannte Vertragsstaaten:
**BE CH FR GB IT LI LU NL SE**

(56) Entgegenhaltungen:
**FR - A - 2 462 694**
**GB - A - 942 617**
**GB - A - 1 091 646**
**US - A - 3 055 691**

(73) Patentinhaber: **ELECTRO-NITE N.V., Grote Baan 27a,
B-3530 Houthalen (BE)**

(72) Erfinder: **Bollen, Theo, Kneippstraat 72, B-3600 Genk
(BE)**

(74) Vertreter: **Radt, Finkener, Ernesti Patentanwälte,
Heinrich-König-Strasse 119, D-4630 Bochum 1 (DE)**

ACTORUM AG

## Beschreibung

Die Erfindung bezieht sich auf einen verbrauchbaren Messkopf für die Durchführung thermischer und analytischer Bestimmungen, vorzugsweise zur Temperaturmessung in flüssigen Metallen, der auf das mit einem Kupplungsstück versehene Ende einer hohlen Lanze, insbesondere aus Pappe, aufsteckbar ist, durch die die elektrischen Ausgleichsleitungen zu einem Messinstrument geführt sind, wobei der Messkopf mit einer eine elektrische Verbindung zu einem Thermoelement schaffenden Kupplung versehen ist, die auf ein Kupplungsstück der Lanze passt und die Heisslötstelle des Thermoelementes in einem U-förmigen Quarzrohr angeordnet ist, das an dem der Kupplung gegenüberliegenden Ende des Messkopfes vorgesehen ist.

Derartige verbrauchbare oder verlorene Temperaturfühler werden beispielsweise zur Messung der Temperatur von Stahlschmelzen verwendet. Sie bestehen im allgemeinen aus einem zylindrischen Grundkörper aus isolierendem Material, z.B. einem Körper aus keramischem Material oder aus Quarzsand, in den auf der einen Seite das U-förmige Quarzrohr mit den Drähten des Thermoelementes eingesetzt ist, während das andere Ende die meist als Steckverbindung ausgebildete, in das Kupplungsstück der Lanze passende Kupplung enthält. Die Steckverbindung besteht aus kontakttragenden Oberflächen aus weichelastischem Kunststoff. Derartige Tauchthermoelemente sind beispielsweise aus der DE-PS 1 648 203 und der DE-OS 2 549 140 bekannt. Bei diesen besteht das an der Messlanze vorgesehene Kupplungsstück aus einem Kontaktstift, der koaxial zu einem Kontaktzylinder angeordnet ist. In dieses Kontaktstück passen die aus weichelastischem Werkstoff bestehenden Kontaktträger des Thermoelementes, die sowohl an dem Kontaktstift als auch an dem Kontaktzylinder anliegen.

Die Herstellung der bekannten Messköpfe aus keramischem oder einem ähnlichen Material, insbesondere der Zusammenbau der einzelnen Teile einschliesslich der Verbindung der Kontaktoberflächen mit den Drähten des Thermoelementes erfordert einen nicht unerheblichen Aufwand. Eine vollautomatische Fertigung ist bisher nicht möglich gewesen; vielmehr müssen eine Reihe von Arbeitsgängen von Hand vorgenommen werden.

Der Erfindung liegt die Aufgabe zugrunde, einen Messkopf mit einer Steckverbindung zum Anschluss an das Kupplungsstück einer Lanze einfacher und so auszubilden, dass eine vollautomatische Fertigung möglich ist.

Ausgehend von einem Messkopf der eingangs beschriebenen Art besteht die Erfindung darin, dass der Messkopf aus plattenförmigen, vorzugsweise aus Pappe gefertigten Einzelelementen mit etwa rechteckförmiger Grundform besteht, die in einer senkrecht zur Plattenebene verlaufenden Richtung, vorzugsweise von den beiden Seiten eines mittleren plattenförmigen Elementes aus, aufeinandergelegt und aneinander befestigt sind.

Eine Weiterbildung der Erfindung sieht vor, dass der Messkopf aus einem zylinderförmig ausgebildeten Grundkörper besteht und das mittlere plattenförmige Element die grösste Breite hat, wobei die Breite der weiteren aufgelegten Elemente zur Bildung des zylinderförmigen Körpers abnimmt, und mindestens eins, vorzugsweise zwei der plattenförmigen Einzelelemente am unteren Ende mit Ansätzen zur Bildung der Kupplung für die elektrische Verbindung mit dem Kupplungsstück der Lanze versehen ist.

Weitere Merkmale ergeben sich aus den abhängigen Ansprüchen.

Es hat sich überraschenderweise herausgestellt, dass es möglich ist, einen zylinderartigen Messkopf mit den Anlageflächen zum Einstecken in eine Lanze, insbesondere in ein Papprohr sowie einer Kupplung zum Anschluss an das Kupplungsstück der Lanze aus einzelnen Platten aus Pappe zu fertigen, die bei der Herstellung des Messkopfes, beispielsweise durch Kleben, aufeinander befestigt werden. Dabei ist es gleichzeitig möglich, die aus den Schenkeln des U-förmigen Quarzrohres herausragenden Drähte des Thermoelementes in einfacher Weise zwischen zwei mit einer Schicht aus leitendem Material versehenen Platten zu verklemmen. Die einzelnen Platten können beispielsweise aus einem Pappstreifen entsprechender Stärke durch Ausstanzen gefertigt werden.

Der Messkopf lässt sich in sehr wirtschaftlicher Weise in einem vollautomatisierten Arbeitsablauf herstellen, was deswegen von Bedeutung ist, weil es sich um einen Massenartikel handelt, der in grosser Stückzahl benötigt wird.

Auf der Zeichnung ist ein Ausführungsbeispiel der Erfindung dargestellt. Es zeigen:

Fig. 1 eine Draufsicht auf die einzelnen plattenförmigen Einzelelemente, die zur Bildung des zylinderförmigen Grundkörpers aufeinandergeschichtet werden,

Fig. 2 eine perspektivische Darstellung des Grundkörpers,

Fig. 3 eine perspektivische Darstellung des fertigen Messkopfes und

Fig. 4 eine Ansicht auf den in Fig. 3 dargestellten Messkopf von unten.

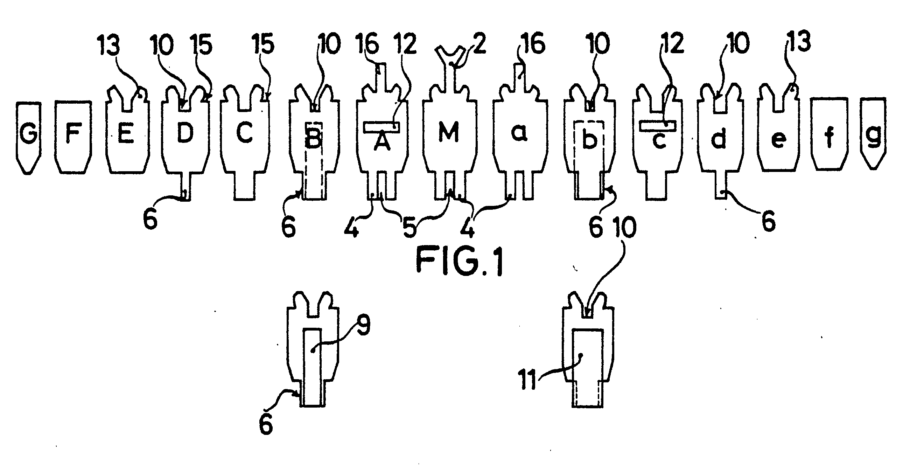

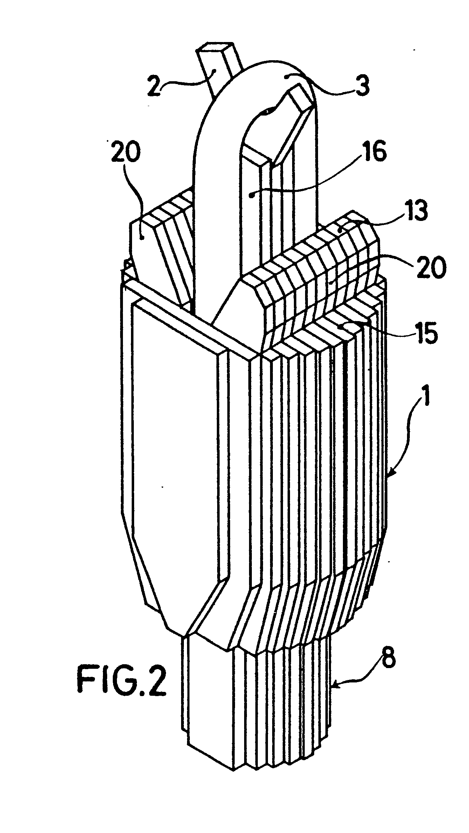

Fig. 1 zeigt die Form der einzelnen plattenförmigen Einzelelemente, die in der Reihenfolge nebeneinander dargestellt wurden, in der sie zur Bildung des auf Fig. 2 dargestellten Grundkörpers zusammengefügt werden. Dabei bildet die auf der Zeichnung am weitesten rechts liegende Platte g die unterste und die Platte G die oberste Platte, wobei die auf der Zeichnung dargestellte Oberseite jeweils die nach oben gerichtete Fläche bleibt, d.h. f wird auf g, e auf f aufgelegt usw.

Die plattenförmigen Elemente haben eine etwa rechteckige Grundform. Die mittlere Platte M hat die grösste Breite, während die Breite der sich auf beiden Seiten anschliessenden Platte a bis g bzw. A bis G zur Bildung eines zylinderartigen Grundkörpers 1 (Fig. 2) abnimmt. Wie sich aus Fig. 1 ergibt, haben die auf beiden Seiten des mittleren Elementes M und an entsprechenden Stellen angeordneten Einzelelemente praktisch die gleiche Gestalt, d.h. a entspricht A, b entspricht B, usw. Das mittlere plattenförmige Element M ist mittig mit einem nach oben vorstehenden Y-förmigen Steg 2 versehen, der als Auflage für das Quarzrohr 3 dient. Ferner sind das mittlere Element M und die daran anliegenden plattenförmigen Elemente a und A an ihrem unteren Ende mit gabelartigen Ansätzen 4 versehen, durch die eine mittlere längliche Ausnehmung 5 gebildet wird. Die beiden folgenden Elemente B und b haben an den entsprechenden Stellen einen zungenförmigen Ansatz 6, etwa von der Grösse des gabelartigen Ansatzes, jedoch ohne die mittige Ausnehmung. Auf diese Weise wird beim Auflegen von je zwei Elementen (a, b und A, B) auf das mittlere Element am unteren Ende des so gebildeten Körpers ein Hohlraum mit einem rechteckigen bzw. quadratischen Querschnitt gebildet, der einen Teil der Kupplung zum Anschluss des Messkopfes an die Lanze darstellt. Der Hohlraum ist auf Fig. 4 sichtbar und mit dem Bezugsszeichen 7 versehen. Auch weitere, sich auf beiden Seiten anschliessende Einzelelemente können an ihren unteren Enden mit zungenförmigen Ansätzen 6 versehen sein. Bei dem auf der Zeichnung dargestellten Ausführungsbeispiel haben die Elemente c und d sowie C und D derartige Ansätze mit einer abnehmenden Breite. Bei den weiteren, sich an die Einzelelemente D bzw. d anschliessenden Platten e, f, g bzw. E, F, G fehlt der untere zungenförmige Ansatz. Auf diese Weise wird am unteren Ende des Körpers 1 ein Ansatz 8 mit einem etwa zylinderförmigen Aussenumfang gebildet, in dessen Mitte sich der Hohlraum 7 befindet. Der Ansatz 8 bildet zusammen mit dem Hohlraum 7 die Kupplung für den Anschluss des Messkopfes an das Kupplungsstück der Lanze. Zur Bildung einer elektrischen Kontaktstelle sieht die Erfindung vor, die dem Hohlraum 7 zugewandte Fläche des zungenförmigen Ansatzes 6 mit einer Beschichtung aus leitendem Material zu versehen. Bei dem auf Fig. 1 dargestellten Ausführungsbeispiel ist das Element B mit einer Beschichtung 9 versehen, die etwas schmaler ist als der zungenförmige Ansatz 6 und bis zum oberen Abschnitt des Elementes hochgeführt ist. Die Beschichtung, bei der es sich beispielsweise um eine Kupferfolie handeln kann, endet in der Nähe eines mittleren rechteckigen Ausschnittes 10, der an diesem und gegebenenfalls einem oder mehreren folgenden Elementen vorgesehen ist und zur Aufnahme eines Schenkelendes des Quarzrohres 3 dient. Der zweite elektrische Kontakt wird an der Platte b gebildet. Zu diesem Zweck wird die dem Hohlraum abgewandte Seite des zungenförmigen Ansatzes 6 des Einzelelementes b mit einer Beschichtung 11 aus leitendem Material versehen, die über die Seitenkanten des zungenförmigen Ansatzes gezogen und ebenfalls bis zum oberen Abschnitt des Elementes hochgeführt ist. Auch an diesem und gegebenenfalls den folgenden Elementen c, d, e ist ein rechteckiger Ausschnitt 10 zur Aufnahme des anderen Schenkelendes des Quarzrohres vorgesehen. Die mit der Beschichtung versehenen Rückseiten der im oberen Teil der Fig. 1 dargestellten Einzelelemente B und b liegen auf den unter diesen abgebildeten Elementen oben.

Die Befestigung der Drähte des Thermoelementes, die bekanntlich durch das Quarzrohr geführt werden, mit den leitenden Schichten 9 und 11 kann in einfacher Weise durch Verklemmen der Drähte mit benachbarten Einzelelementen erfolgen. Zu diesem Zweck besteht die Möglichkeit, auf den Flächen der benachbarten Platten A bzw. c, die an den beschichteten Flächen anliegen, schmale quer verlaufende leitende Schichten 12 anzubringen, so dass die Drähte des Thermoelementes beim Zusammenfügen der Platten zwischen zwei leitenden Schichten verklemmt werden.

Wie sich aus Fig. 1 ergibt, sind die rechteckigen Ausschnitte an den Platten B bis E und b bis e vorgesehen. Es besteht die Möglichkeit, die Ausschnitte bei der einen Gruppe von Einzelelementen etwas tiefer als bei der anderen Gruppe zu gestalten, z.B. wenn das Quarzrohr 3 Schenkel mit unterschiedlichen Längen hat. Bei dem auf Fig. 1 dargestellten Ausführungsbeispiel sind die Ausschnitte 10 bei den Elementen b bis e etwas tiefer als bei den Elementen B bis E.

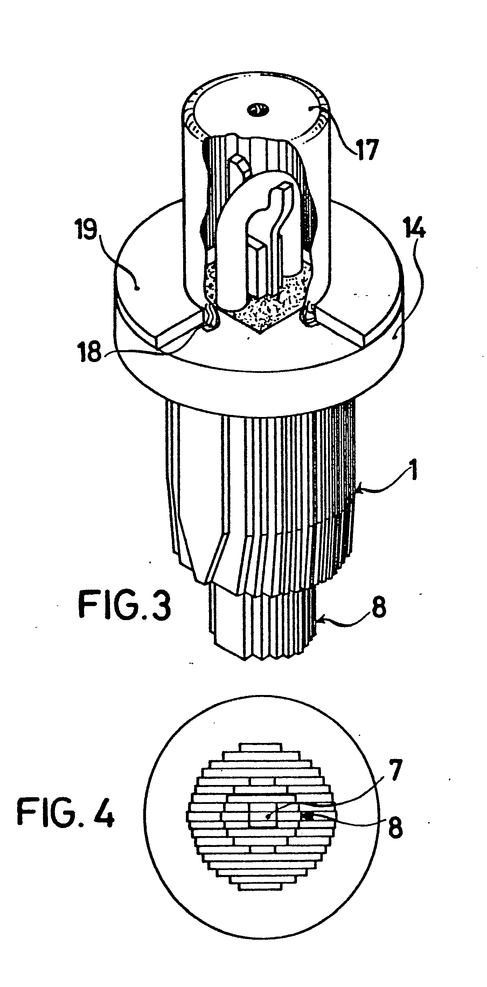

Die oberen Kanten 15 der plattenförmigen Elemente sind symmetrisch zur Mittellinie mit zwei gegenüber den Seitenkanten zurückspringenden, nach oben vorstehenden Ansätzen 13 versehen, die zur Bildung von Anlageflächen 20 für den mittleren Ausschnitt einer Scheibe 14 dienen. Diese Scheibe, deren Stärke etwa der Höhe der Ansätze entspricht, wird, wie sich beispielsweise aus Fig. 3 ergibt, auf den oberen Teil des Körpers 1 aufgesetzt und an den Anlageflächen der Ansätze 13 verklemmt. Dabei liegt sie auf den freigebliebenen Abschnitten der oberen Kanten 15 der plattenförmigen Elemente, sowie auf den oberen Kanten eines oder mehrerer, am weitesten aussen sitzender plattenförmiger Elemente f, g bzw. F, G, die nicht mit Ansätzen versehen sind, auf.

Bei dem dargestellten Ausführungsbeispiel wird durch die Ansätze 13 eine in etwa quadratische Anlagefläche 20 gebildet, die auch kreisförmig oder ähnlich sein kann. Die unmittelbar an dem mittleren Element M anliegenden Einzelplatten a und A haben darüber hinaus noch einen nach oben vorstehenden zungenförmigen Ansatz 16, der den mittleren Abschnitt des Y-förmigen Steges 2 verstärkt. An den Ansätzen 16 liegen die Schenkel des Quarzrohres an.

Die gegenüber der Oberseite der Scheibe 14 vorstehenden Teile des Messkopfes sind mit einer Kappe 17, die aus metallischem Werkstoff besteht, abgedeckt. Die Kappe ist an ihrem unteren offenen Ende mit einem nach aussen umgebördelten Rand 18 versehen und wird mit einer Befestigungsplatte 19, die eine mittlere, dem Querschnitt der Kappe entsprechende Öffnung hat, dadurch festgehalten, dass der Randabschnitt der Öffnung der Platte 19 auf dem umgebördelten Rand 18 der Kappe aufliegt. Die Platte 19 wird beispielsweise durch Kleben auf der Oberfläche der Scheibe 14 befestigt. Der das Quarzrohr umgebende Hohlraum kann mit feuerfestem Zement ausgefüllt werden.

Die Herstellung der Messköpfe gemäss vorliegender Erfindung kann in einer äusserst einfachen und wirtschaftlichen Weise vollautomatisch durchgeführt werden. Dabei ist vorgesehen, dass die einzelnen plattenförmigen Elemente durch Ausstanzen aus einem Streifen aus geeigneter Pappe hergestellt werden, die eine Stärke von etwa 1 mm hat. Die einzelnen plattenförmigen Elemente können durch Zusammenkleben aneinander befestigt werden. Es besteht auch die Möglichkeit, zwei oder mehr der auf beiden Seiten des mittleren Elementes angeordneten Platten zusammenzufassen und aus einem Stück aus einem entsprechend stärkeren Material herzustellen.

Der etwa rechteckige Teil der Platten hat beispielsweise eine Höhe von etwa 25 mm; die Höhe der oberen Ansätze 13 beträgt etwa 5 mm, die Länge der unteren zungenförmigen Ansätze etwa 10 mm. Die Breite des mittleren Elementes kann etwa 15 bis 20 mm betragen, so dass bei Verwendung einer entsprechenden Anzahl von Platten ein zylindrischer Grundkörper mit einem Durchmesser von 15 bis 20 mm gebildet wird. Selbstverständlich können auch grössere oder kleinere Messköpfe hergestellt werden.

## Patentansprüche

1. Verbrauchbarer Messkopf für die Durchführung thermischer und analytischer Bestimmungen, vorzugsweise zur Temperaturmessung in flüssigen Metallen, der auf das mit einem Kupplungsstück versehene Ende einer hohlen Lanze, insbesondere aus Pappe, aufsteckbar ist, durch die die elektrischen Ausgleichsleitungen geführt sind, wobei der Messkopf mit einer eine elektrische Verbindung zu einem Thermoelement schaffenden Kupplung (7, 8) versehen ist, die auf das Kupplungsstück der Lanze passt und die Heisslötstelle des Thermoelementes in einem U-förmigen Quarzrohr (3) angeordnet ist, das an dem der Kupplung gegenüberliegenden Ende des Messkopfes gegenüber diesem vorsteht, dadurch gekennzeichnet, dass der Messkopf aus plattenförmigen Einzelelementenn (A bis G und a bis g) mit etwa rechteckiger Grundform besteht, die in einer senkrecht zur Plattenebene verlaufenden Richtung aufeinandergelegt und aneinander befestigt sind.

2. Messkopf nach Anspruch 1, dadurch gekennzeichnet, dass die plattenförmigen Einzelelemente (A bis G bzw. a bis g) ausgehend von der einen bzw. anderen Seite eines mittleren plattenförmigen Elementes (M) aufeinandergelegt und befestigt sind.

3. Messkopf nach den Ansprüchen 1 und 2, dadurch gekennzeichnet, dass die plattenförmigen Elemente aus Pappe bestehen.

4. Messkopf nach Anspruch 3, dadurch gekennzeichnet, dass die Pappe selbstklebend ist.

5. Messkopf nach den Ansprüchen 3 und 4, dadurch gekennzeichnet, dass die Pappe feuchtigkeitsbeständig ist.

6. Messkopf nach den Ansprüchen 3 bis 5, dadurch gekennzeichnet, dass die für die Herstellung der plattenförmigen Elemente benutzte Pappe aus mehreren Schichten besteht.

7. Messkopf nach den Ansprüchen 1 bis 6, dadurch gekennzeichnet, dass er aus einem zylinderförmig ausgebildeten Grundkörper (1) besteht und das mittlere plattenförmige Element (M) die grösste Breite hat, wobei die Breite der weiteren aufgelegten Elemente (A bis G und a bis g) zur Bildung des zylinderförmigen Körpers abnimmt und mindestens eins, vorzugsweise zwei der plattenförmigen Einzelelemente am unteren Ende mit Ansätzen zur Bildung der Kupplung für die elektrische Verbindung mit dem Kupplungsstück der Lanze versehen ist.

8. Messkopf nach den Ansprüchen 1 bis 7, dadurch gekennzeichnet, dass die auf beiden Seiten des mittleren Elementes (M) und an entsprechenden Stellen angeordneten Einzelelemente (A, a und B, b, usw.) die gleiche Gestalt haben.

9. Messkopf nach den Ansprüchen 1 bis 8, dadurch gekennzeichnet, dass das mittlere Element (M) mittig mit einem nach oben vorstehenden Y-förmig ausgebildeten Steg (2) versehen ist, der als Auflage für das Quarzrohr (3) dient.

10. Messkopf nach den Ansprüchen 1 bis 9, dadurch gekennzeichnet, dass das mittlere Element (M) und die an dem mittleren Element anliegenden Einzelelemente (A und a) an ihrem unteren Ende mit gabelartigen Ansätzen (4), die eine mittige längliche Ausnehmung (5) bilden, versehen sind und die beidseitig anliegenden Elemente (B und b) und gegebenenfalls weitere Elemente (z.B. C, D und c, d) an der entsprechenden Stelle einen zungenförmigen Ansatz (6) etwa von der Grösse des gabelartigen Ansatzes, jedoch ohne die mittige Ausnehmung haben, derart, dass beim Auflegen von je zwei Elementen auf die beiden Seiten des mittleren Elementes am unteren Ende des so gebildeten Körpers ein Hohlraum (7) gebildet wird.

11. Messkopf nach den Ansprüchen 1 bis 10, dadurch gekennzeichnet, dass die dem Hohlraum (7) zugewandte Fläche des zungenförmigen Ansatzes (6) des auf einer Seite des mittleren Elementes angeordneten Einzelelementes (B) mit einer Beschichtung (9) aus leitendem Material, z.B. einer Kupferfolie, versehen ist, die schmaler ist als der zungenförmige Ansatz (6) und bis zum oberen Abschnitt des Elementes hochgeführt ist und in der Nähe eines mittleren rechteckigen Ausschnittes (10) endet, der an diesem und gegebenenfalls einem oder mehreren folgenden Elementen (C bis E) vorgesehen ist und zur Aufnahme eines Schenkelendes des Quarzrohres (3) dient, wobei der durch den entsprechenden Schenkel geführte Draht des Thermoelementes fest mit der leitenden Schicht (9) verbunden ist.

12. Messkopf nach den Ansprüchen 1 bis 11, dadurch gekennzeichnet, dass die dem Hohlraum (7) abgewandte Fläche des zungenförmigen Ansatzes (6) des auf der anderen Seite des mittleren Elementes (M) angeordneten Einzelelementes (b) mit einer Beschichtung (11) aus leitendem Material, z.B. einer Kupferfolie, versehen ist, die über die Seitenkanten des zungenförmigen Ansatzes (6) gezogen und bis zum oberen Abschnitt des Elementes hochgeführt ist und in der Nähe eines mittleren rechteckigen Ausschnittes (10) endet, der an diesem und gegebenenfalls einem oder mehreren folgenden Elementen (c bis e) vorgesehen ist und zur Aufnahme des Endes des anderen Schenkels des Quarzrohres (3) dient, wobei der durch diesen Schenkel geführte Draht des Thermoelementes fest mit der leitenden Schicht (11) verbunden ist.

13. Messkopf nach den Ansprüchen 1 bis 12, dadurch gekennzeichnet, dass die Verbindung der durch das Quarzrohr (3) geführten Drähte mit den leitenden Schichten (9 und 11) der Einzelelemente (B bzw. b) durch Verklemmen mit der an der beschichteten Seite anliegendenn Platte (A bzw. c) kurz unterhalb der rechteckigen Ausschnitte (10) erfolgt, wobei diese anliegenden Platten (A und c) im Bereich der Verbindungsstelle gegebenenfalls auch mit einer leitenden Schicht (12) versehen sind.

14. Messkopf nach den Ansprüchen 1 bis 13, dadurch gekennzeichnet, dass die gabelförmigen Ansätze (4) und die zungenförmigen Ansätze (6) ausgehend von dem mittleren Element (M) eine abnehmende Breite haben, so dass der zusammengesetzte Grundkörper (1) an seinem unteren Ende einen Ansatz (8) mit einer zylinderartigen Aussenfläche und einem mittleren Hohlraum (7) aufweist.

15. Messkopf nach den Ansprüchen 1 bis 14, dadurch gekennzeichnet, dass die oberen Kanten (15) einiger plattenförmiger Elemente symmetrisch zur Mittellinie mit zwei gegenüber den Seitenkanten zurückspringenden, nach oben vorstehenden Ansätzen (13) zur Bildung von nach dem Zusammenfügen der Einzelelemente vorliegenden Anlageflächen (20) für den mittleren Ausschnitt einer Scheibe (14) versehen sind, deren Stärke der Höhe der Ansätze (13) entspricht und die auf den ausserhalb der Ansätze liegenden oberen Kanten (15) der plattenförmigen Elemente aufliegt.

16. Messkopf nach den Ansprüchen 1 bis 15, dadurch gekennzeichnet, dass der Durchmesser der Scheibe (14) grösser ist als der des zylindrischen Grundkörpers (1).

17. Messkopf nach den Ansprüchen 1 bis 16, dadurch gekennzeichnet, dass die gegenüber der Oberseite der Scheibe vorstehenden Teile des Messkopfes mit einer Kappe (17), vorzugsweise aus metallischem Werkstoff, abgedeckt sind, die mit einem an ihrem unteren Ende nach aussen vorstehenden umgebördelten Rand (18) auf der Scheibe aufliegt und mit einer Befestigungsplatte (19) mit einer mittleren, dem Querschnitt der Kappe entsprechenden Öffnung gehalten wird, deren Randabschnitt auf dem umgebördelten Rand der Kappe aufliegt, wobei die Befestigungsplatte an der Scheibe vorzugsweise durch eine Klebeverbindung befestigt ist.

18. Messkopf nach den Ansprüchen 1 bis 17, dadurch gekennzeichnet, dass die plattenförmigen Elemente (M, A bis G und a bis g) durch Ausstanzen aus einem Streifen aus Pappe gefertigt sind.

19. Messkopf nach den Ansprüchen 1 bis 18, dadurch gekennzeichnet, dass die einzelnen plattenförmigen Elemente eine Stärke von etwa 1 mm bei einer Höhe von etwa 40 bis 50 mm und einer Breite haben, die bei den schmalsten Elementen (G, g) bei etwa 5 bis 8 mm und bei dem breitesten Element (M) bei etwa 15 bis 20 mm liegt und dass der zylindrische Grundkörper einen Durchmesser von den Abmessungen des breitesten plattenförmigen Elementes hat.

20. Messkopf nach den Ansprüchen 1 bis 19, dadurch gekennzeichnet, dass mehrere plattenförmige Elemente, wie z.B. die beidseitig jeweils drei oder vier aussenliegenden Elemente, aus einem Stück gefertigt sind.

**Claims**

1. An expendable measuring head for carrying out thermal and analytical measurements, more particularly for temperature measurement in molten metals, the said head being adapted to be fitted on to the end of a hollow lance, more particularly made of cardboard, said end being provided with a coupling member, the electrical balancing leads extending through said lance, the measuring head being provided with a coupling (7, 8) which provides an electrical connection to a thermocouple and which fits on the lance coupling member and the thermocouple hot junction is disposed in a U-shaped quartz tube (3) which projects from the measuring head at the end thereof remote from the coupling, characterised in that the measuring head consists of individual elements in the form of plates (A to G and a to g) of substantially rectangular basic shape, which are placed one upon the other and are secured to one another in a direction extending perpendicularly to the plate plane.

2. A measuring head according to claim 1, characterised in that the individual plates (A to G and a to g) are placed one upon the other and secured starting from each of the two sides of a middle plate (M).

3. A measuring head according to claims 1 and 2, characterised in that the plates consist of cardboard.

4. A measuring head according to claim 3, characterised in that the cardboard is self-adhesive.

5. A measuring head according to claims 3 and 4, characterised in that the cardboard is resistant to moisture.

6. A measuring head according to claims 3 to 5, characterised in that the cardboard used for the production of the plates consists of a plurality of layers.

7. A measuring head according to claims 1 to 6, characterised in that it consists of a cylindrical basic member (1) and the middle plate element (M) has the greatest width, the width of the other fitted elements (A to G and a to g) for forming the cylindrical member decreasing and at least one, preferably two, of the individual plate elements is provided, at the bottom end, with projections for forming the coupling for the electrical connection to the lance coupling member.

8. A measuring head according to claims 1 to 7, characterised in that the individual elements (A, a and B, b, etc.) disposed on both sides of the middle element (M) and at corresponding places have the same form.

9. A measuring head according to claims 1 to 8, characterised in that the middle element (M) is provided centrally with an upwardly projecting Y-shaped web (2) acting as a support for the quartz tube (3).

10. A measuring head according to claims 1 to 9, characterised in that the middle element (M) and the individual elements (A and a) adjoining the middle element have, at their bottom end, fork-like projections (4) which form a central elongate recess (5) and the adjacent elements (B and b) on either side and any other elements (e.g. C, D and c, d) have at the corresponding place a projection (6) in the form of a tongue of substantially the same size as the fork projection but without the central recess, so that when each pair of elements is placed on either side of the middle element a cavity (7) is formed at the bottom end of the member formed in this way.

11. A measuring head according to claims 1 to 10, characterised in that that surface of the tongue projection (6) of the individual elelement (B) disposed on one side of the middle element which faces the cavity (7) is provided with a coating (9) of conductive material, e.g. a copper foil, which is narrower than the tongue projection (6) and is continued up to the top section of the element and terminates near a middle rectangular cut-out (10) which is provided at this element and if required one or more subsequent elements (C to E) and serves to receive one end of the limb of the quartz tube (3), the thermocouple wire which passes through the corresponding limb being rigidly connected to the conductive coating (9).

12. A measuring head according to claims 1 to 11, characterised in that that surface of the tongue projection (6) of the individual element (b) disposed on the other side of the middle element (M) which is remote from the cavity (7) is provided with a coating (11) of conductive material, e.g. a copper foil, which is drawn over the side edges of the tongue projection (6) and is continued as far as the top section of the element and terminates near a middle rectangular cut-out (10) which is provided at this and if required one or more subsequent elements (c to e) and serves to receive the end of the other limb of the quartz tube (3), the thermocouple wire which passes through this limb being rigidly connected to the conductive coating (11).

13. A measuring head according to claims 1 to 12, characterised in that the wires passing through the quartz tube (3) are connected to the conductive coatings (9 and 11) of the individual elements (B and b) by clamping to the plate (A or c) abutting the coated side, just beneath the rectangular cut-outs (10), said abutting plates (A and c) also being provided with a conductive coating (12) if required in the region of the connection.

14. A measuring head according to claims 1 to 13, characterised in that the fork projections (4) and the tongue projections (6) decrease in width starting from the middle element (M) so that the assembled basic member (1) has at its bottom end a projection (8) having a cylindrical outer surface and a central cavity (7).

15. A measuring head according to claims 1 to 14, characterised in that the top edges (15) of some of the plate elements are provided, symmetrically with respect to the centre-line, with two upwardly extending projections (13) which recede from the side edges, in order to form contact surfaces (20) after the individual elements have been assembled, for the middle cut-out of a disc (14), the thickness of which corresponds to the height of the projections (13) and which bears on the top edges (15) of the plate elements situated outside the projections.

16. A measuring head according to claims 1 to 15, characterised in that the diameter of the disc (14) is larger than that of the cylindrical basic member (1).

17. A measuring head according to claims 1 to 16, characterised in that the measuring head parts which project from the top of the disc are covered by a cap (17), preferably of metal material, which rests on the disc by an edge (18) which is flanged over so as to project outwards at its bottom end, and which is held by a fixing plate (19) having a central opening which corresponds to the cap cross-section and the edge portion of which bears on the flanged-over edge of the cap, the fixing plate being secured to the disc preferably by an adhesive connection.

18. A measuring head according to claims 1 to 17, characterised in that the plate elements (M, A to G and a to g) are made by punching from a strip of cardboard.

19. A measuring head according to claims 1 to 18, characterised in that the individual plate elements have a thickness of about 1 mm with a height of about 40 to 50 mm and a width for the narrowest elements (G, g) is about 5 to 8 mm and for the widest element (M) about 15 to 20 mm, and the cylindrical basic member has a diameter in the dimensions of the widest plate element.

20. A measuring head according to claims 1 to 19, characterised in that a plurality of plate elements, e.g. the three or four pairs of outer elements on either side, are made in one piece.

**Revendications**

1. Tête de mesure consommable pour effectuer des déterminations thermiques et analytiques, de préférence pour mesurer la température de métaux liquides, qui peut être emboîtée sur l'extrémité, munie d'une pièce d'accouplement, d'une lance creuse notamment en carton par laquelle passent les conducteurs électriques de compensation, la tête de mesure étant dotée d'un accouplement (7, 8) qui, établissant une liaison électrique avec un thermocouple, s'adapte sur la pièce d'accouplement de la lance, la zone de brasure à chaud du thermocouple étant disposée dans un tube de quartz (3) en U qui fait saillie au-delà de l'extrémité de la tête de mesure opposée à l'accouplement, caractérisée par le fait que la tête de mesure se compose d'éléments individuels (A à G et a à g) qui, en forme de plaques et ayant une configuration de base sensiblement rectangulaire, sont superposés et fixés les uns aux autres dans une direction s'étendant perpendiculairement au plan des plaques.

2. Tête de mesure selon la revendication 1, caractérisée par le fait que les éléments individuels en forme de plaques (A à G ou a à g respectivement) sont superposés et collés à partir d'un côté ou de l'autre d'un élément central (M) en forme de plaque.

3. Tête de mesure selon l'une des revendications 1 et 2, caractérisée par le fait que les éléments en forme de plaques consistent en du carton.

4. Tête de mesure selon la revendication 3, caractérisée par le fait que le carton est autocollant.

5. Tête de mesure selon l'une des revendications 3 et 4, caractérisée par le fait que le carton est résistant à l'humidité.

6. Tête de mesure selon l'une des revendications 3 à 5, caractérisée par le fait que le carton utilisé pour la confection des éléments en forme de plaques comprend plusieurs couches.

7. Tête de mesure selon l'une des revendications 2 à 6, caractérisée par le fait qu'elle consiste en un corps de base (1) de réalisation cylindrique et l'élément central (M) en forme de plaque présente la plus grande largeur, la largeur des autres éléments (A à G et a à g) mis en place décroissant pour former le corps cylindrique, et au moins un, de préférence deux parmi les éléments individuels en forme de plaques sont munis, à l'extrémité inférieure, de saillies pour former l'accouplement en vue de la liaison électrique avec la pièce d'accouplement de la lance.

8. Tête de mesure selon l'une des revendications 2 à 7, caractérisée par le fait que les éléments individuels (A, a et B, b, etc.) disposés de part et d'autre de l'élément central (M) et à des emplacements correspondants ont la même configuration.

9. Tête de mesure selon l'une des revendications 2 à 8, caractérisée par le fait que l'élément central (M) est équipé, en son centre, d'une nervure (2) conformée en Y et saillant vers le haut, qui sert d'appui au tube de quartz (3).

10. Tête de mesure selon l'une des revendications 2 à 9, caractérisée par le fait que l'élément central (M) et les éléments individuels (A et a) adjacents à cet élément central sont munis, à leur extrémité inférieure, de saillies fourchues (4) qui délimitent un évidement central allongé (5), les éléments (B et b) contigus de part et d'autre et éventuellement d'autres éléments (par exemple C, D et c, d) comportant, à l'emplacement correspondant, une saillie (6) en forme de languette ayant environ la dimension de la saillie fourchue mais ne présentant toutefois pas l'évidement central, de telle sorte que, lorsque deux éléments respectifs sont appliqués des deux côtés de l'élément central, une cavité (7) soit formée à l'extrémité inférieure du corps ainsi constitué.

11. Tête de mesure selon la revendication 10, caractérisée par le fait que la surface, tournée vers la cavité (7), de la saillie (6) en forme de languette de l'élément individuel (B) disposé d'un côté de l'élément central est pourvue d'un revêtement (9) en une matière conductrice par exemple en une feuille de cuivre, qui est plus étroit que la saillie (6) en forme de languette, est prolongé vers le haut jusqu'à la région supérieure de l'élément et s'achève à proximité d'une échancrure centrale rectangulaire (10) qui est prévue sur cet élément et éventuellement sur un ou plusieurs éléments suivants (C à E) et sert à recevoir l'extrémité d'une branche du tube de quartz (3), le fil du thermocouple passant par la branche correspondante étant assujetti à la couche conductrice (9).

12. Tête de mesure selon l'une des revendications 10 et 11, caractérisée par le fait que la surface, éloignée de la cavité (7), de la saillie (6) en forme de languette de l'élément individuel (b) disposé de l'autre côté de l'élément central (M) est dotée d'un revêtement (11) en une matière conductrice, par exemple en une feuille de cuivre, qui est appliqué sur les bords latéraux de la saillie (6) en forme de languette, est prolongé vers le haut jusqu'à la région supérieure de l'élément et s'achève à proximité d'une échancrure centrale rectangulaire (10) qui est prévue sur cet élément et éventuellement sur un ou plusieurs éléments suivants (c à e) et sert à recevoir l'extrémité de l'autre branche du tube de quartz (3), le fil du thermocouple passant par cette branche étant assujetti à la couche conductrice (11).

13. Tête de mesure selon l'une des revendications 11 et 12, caractérisée par le fait que la jonction des fils passant par le tube de quartz (3) avec les couches conductrices (9 et 11) des éléments individuels (B ou b, respectivement) a lieu par coincement avec la plaque (A ou c, respectivement) contiguë au côté revêtu, à une courte distance au-dessous des échancrures rectangulaires (10), ces plaques adjacentes (A et c) étant, le cas échéant, également munies d'une couche conductrice (12) au voisinage de la zone de jonction.

14. Tête de mesure selon l'une des revendications 10 à 13, caractérisée par le fait que les saillies fourchues (4) et les saillies (6) en forme de languettes présentent une largeur décroissant à partir de l'élément central (M), si bien que le corps de base (1) assemblé comporte, à son extrémité inférieure, une queue (8) ayant une surface externe cylindrique et une cavité centrale (7).

15. Tête de mesure selon l'une des revendications 1 à 14, caractérisée par le fait que les bords supérieurs (15) de quelques éléments en forme de plaques sont munis, symétriquement à l'axe médian, de deux oreilles (13) en saillie vers le haut et en retrait par rapport aux bords latéraux, en vue de former des surfaces (20), demeurant après l'assemblage des éléments individuels, pour l'appui de la région centrale d'un disque (14) dont l'épaisseur correspond à la hauteur des oreilles (13) et qui repose sur les bords supérieurs (15) des éléments en forme de plaques, qui sont relégués à l'extérieur des oreilles.

16. Tête de mesure selon la revendication 15, caractérisée par le fait que le diamètre du disque (14) est plus grand que celui du corps cylindrique de base (1).

17. Tête de mesure selon l'une des revendications 15 et 16, caractérisée par le fait que les parties de cette tête de mesure en saillie par rapport à la face supérieure du disque sont recouvertes par un capuchon (17), de préférence en un matériau métallique, qui est en appui sur le disque par un rebord (18) rabattu vers l'extérieur à son extrémité inférieure, et qui est maintenu en place par une plaque de fixation (19) percée d'un orifice central correspondant à la section du capuchon et dont la region marginale repose sur le rebord rabattu de ce capuchon, la plaque de fixation étant fixée au disque de préférence par une liaison collée.

18. Tête de mesure selon l'une des revendications 1 à 17, caractérisée par le fait que les éléments en forme de plaques (M, A à G et a à g) sont réalisés par découpage à l'emporte-pièce dans une bande de carton.

19. Tête de mesure selon l'une des revendications 1 à 18, caractérisée par le fait que les éléments individuels en forme de plaques présentent une épaisseur d'environ 1 mm pour une hauteur d'environ 40 à 50 mm et possèdent une largeur comprise entre environ 5 et 8 mm pour les éléments les plus étroits (G, g) et entre environ 15 et 20 mm pour l'élément le plus large (M); et par le fait que le corps cylindrique de base comporte un diamètre ayant les dimensions de l'élément le plus large en forme de plaque.

20. Tête de mesure selon l'une des revendications 1 à 19, caractérisée par le fait que plusieurs éléments en forme de plaques, comme par exemple les trois ou quatre éléments respectifs situés de part et d'autre à l'extérieur, sont fabriqués d'un seul tenant.

FIG.1

FIG.2

FIG.3

FIG.4